(19) Europäisches Patentamt
European Patent Office
Office européen des brevets

(11) **EP 3 396 803 B1**

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(21) Anmeldenummer: **18164472.5**

(22) Anmeldetag: **28.03.2018**

(51) Int Cl.:
**H02H 3/16** *(2006.01)*  **H02J 3/00** *(2006.01)*
**H02H 3/10** *(2006.01)*  **H02H 5/10** *(2006.01)*

(54) **VERFAHREN UND EINRICHTUNG ZUM ERKENNEN EINES ERDSCHLUSSES**

METHOD AND DEVICE FOR DETECTING AN EARTH FAULT

PROCÉDÉ ET DISPOSITIF DE DÉTECTION D'UNE FUITE À LA TERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2017 DE 102017207011**

(43) Veröffentlichungstag der Anmeldung:
**31.10.2018 Patentblatt 2018/44**

(73) Patentinhaber: **Siemens Aktiengesellschaft 80333 München (DE)**

(72) Erfinder:
• **Auer, Stefan**
  **8010 Graz (AT)**
• **Fickert, Lothar**
  **8042 Graz (AT)**

(56) Entgegenhaltungen:
WO-A1-2013/060382    CH-B1- 703 900
JP-A- 2013 062 955

**Beschreibung**

Die Erfindung bezieht sich auf ein Verfahren zum Erkennen eines Erdschlusses in einem elektrischen Energieverteilnetz oder auf einer elektrischen Energieübertragungsleitung. Bei dem Verfahren werden durch eine Integration von Leistungswerten Energiewerte gebildet und es wird unter Einbezug der Energiewerte geprüft, ob ein Erdschluss vorliegt und ein Erdschlussfehlersignal erzeugt werden soll. Ein solches Verfahren ist aus der Schweizer Patentschrift CH 703 900 B1 sowie aus der Druckschrift "Neues empfindliches Verfahren zur Erkennung von Erdschlusswischern" (Stefan Werben, Ignaz Hübl, Klaus Böhme, ETG Fachbericht 143 STE 2014, 16.-17. Sept. 2014 in Nürnberg, ISBN 978-3-8007-3638-6, VDE Verlag) bekannt. Bei dem aus der letztgenannten Druckschrift bekannten Verfahren werden Leistungswerte vor Ermittlung der Energiewerte zunächst über eine Periode T zeitlich gemittelt, bevor mit ihnen durch die Integration die Energiewerte ermittelt werden.

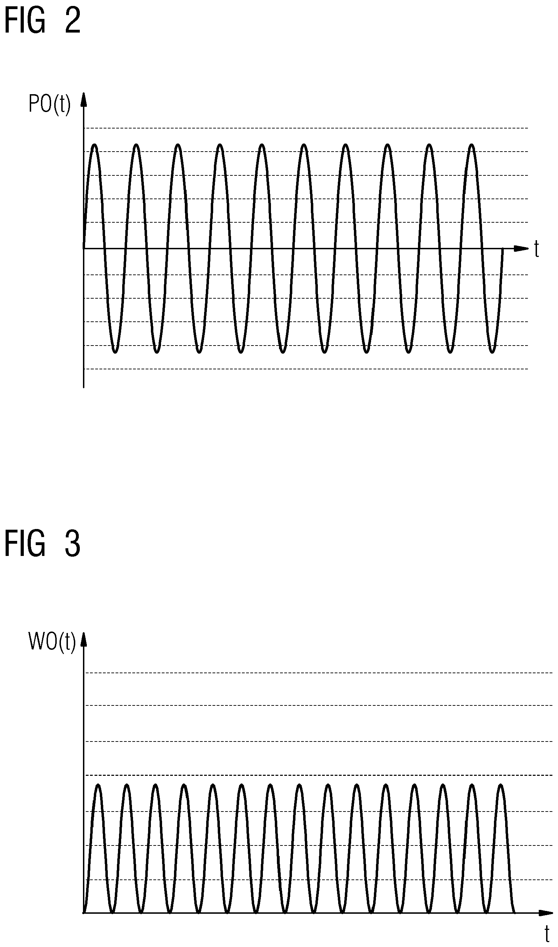

WO2013/060382 stellt den Stand der Technik dar. Es beschreibt ein Verfahren zur Überwachung ein Nullsystem-Spannungswert (Step 20, 21 in Figur 2). Ein Erdschluss wird dadurch erkannt dass die Spannung einen Schwellenwert überschreitet (Step 22). Dadurch wird ein Fehlersignal erzeugt (Step 23) und der Stromwert (Step 24) in einen Wert der Ladung integriert (Step 25), und Kapazität (Step 26). Ein Abweichungs-Kennwert (Step 27) wird aus Nullsystem-Ladungswert, Nullsystem-Kapazitätswert und Nullsystemspannungswert erstellt, (S.17, Z.22 - S.18,Z.8). Und ein Abweichungs-Kennwert wird integriert (Step 28, S.18,Z.36 - S.20,Z.5) Wenn der integrierte Abweichungskennwert einen Schwellenwert überschreitet, wird ein Fehlersignal erzeugt (Step 29, S. 19, Z. 19-22).

Der Erfindung liegt die Aufgabe zugrunde, ein besonders zuverlässiges Verfahren zum Erkennen eines Erdschlusses in einem Energieverteilnetz oder auf einer Energieübertragungsleitung anzugeben.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass im Rahmen einer weiteren Integration die Energiewerte unter Bildung eines Vergleichssignals integriert werden und anhand des Vergleichssignals geprüft wird, ob ein Erdschluss vorliegt und das Erdschlussfehlersignal zu erzeugen ist.

Ein wesentlicher Vorteil des erfindungsgemäßen Verfahrens besteht darin, dass - in Abweichung von vorbekannten Verfahren - nicht Energiewerte allein bzw. als solche für die Erdschlussüberwachung herangezogen werden, sondern stattdessen ein abstraktes Vergleichssignal herangezogen wird, das physikalisch die Dimension eines Produkts aus Energie und Zeit aufweist und somit von der physikalischen Dimension her dem Planck'schen Wirkungsquantum entspricht; ein solches Vergleichssignal ist in der Energietechnik bislang nicht bekannt.

Das Vergleichssignal steigt nach einem Fehlereintritt abschnittsweise monoton an und ist abschnittsweise konstant, es fällt also nicht ab, geschweige denn auf Null. Da das Vergleichssignal die Nulllinie nicht mehr berührt, eignet es sich deutlich besser für eine Fehlerauswertung als beispielsweise die Nullsystem-Leistungswerte, die periodisch das Vorzeichen wechseln, oder die in den oben genannten Druckschriften zum Stand der Technik verwendeten Nullsystem-Energiewerte, die periodisch auf Null absinken. Aufgrund des quasimonotonen Anstiegs des Vergleichssignals bzw. wegen des Fehlens von Nullpunktberührungen ist die Auswertung zeitpunktunabhängig möglich, weil es - anders als bei den vorbekannten Verfahren - keine ungünstigen Auswertzeitpunkte (Zeitpunkte mit Nullpunktberührungen) gibt, zu denen signifikante Fehler auftreten könnten.

Das Vergleichssignal weist vorzugsweise die physikalische Einheit Js auf.

Das Vorzeichen des Vergleichssignals ist abhängig von der Lage des Erdschlusses und ermöglicht damit in vorteilhafter Weise eine Aussage, ob ein erkannter Erdschluss in Vorwärtsrichtung der Betrachtung oder in Rückwärtsrichtung aufgetreten ist.

Besonders vorteilhaft ist es, wenn die Leistungswerte, mit denen durch die Integration die Energiewerte gebildet werden, Nullsystem-Leistungswerte sind, die die zum jeweiligen Betrachtungszeitpunkt tatsächlich umgesetzte Nullsystem-Leistung angeben. Es erfolgt bei dieser Ausführungsvariante also vorab keine zeitliche Mittelung der Leistungswerte, anders als beispielsweise bei dem aus der o. g. Druckschrift vorbekannten Verfahren.

Die Nullsystem-Leistungswerte, mit denen durch die Integration die Energiewerte gebildet werden, werden vorzugsweise ermittelt gemäß

$$P0(t) = U0(t) \cdot I0(t)$$

wobei PO(t) die Nullsystem-Leistungswerte, die die zum jeweiligen Betrachtungszeitpunkt t umgesetzte Nullsystem-Leistung angeben, U0(t) die von dem jeweiligen Betrachtungszeitpunkt t abhängigen Nullsystem-Spannungswerte und I0(t) die von dem jeweiligen Betrachtungszeitpunkt t abhängigen Nullsystem-Stromwerte bezeichnet.

Die Energiewerte werden vorzugsweise ermittelt gemäß

$$W0(t) = \int_0^t P0(t)\,dt$$

wobei WO(t) die Energiewerte bezeichnet, die die vom Betrachtungsbeginn t=0 bis zum jeweiligen Betrachtungszeitpunkt t umgesetzte Nullsystem-Energie angeben.

Das Vergleichssignal wird vorzugsweise ermittelt gemäß

$$iw0(t) = \int_0^t W0(t)dt$$

wobei iw0(t) das Vergleichssignal bezeichnet.

Besonders schnell und einfach kann das Vergleichssignal durch eine Doppelintegration ermittelt werden gemäß

$$iw0(t) = \int_0^t \int_0^t U0(t) \cdot I0(t)dtdt$$

wobei das Teilintegral $\int_0^t U0(t) \cdot I0(t)dt$ den oben genannten Energiewerten entspricht.

Bezüglich der Erzeugung des Erdschlussfehlersignals wird es als vorteilhaft angesehen, wenn der Betrag des Vergleichssignals mit einem Schwellenwert verglichen wird und das Erdschlussfehlersignal erzeugt wird, wenn der Schwellenwert erreicht oder überschritten wird.

Bei einer anderen bevorzugten Ausgestaltung ist vorgesehen, dass der Schwellenwertvergleich vorzeichenabhängig, und zwar in Abhängigkeit vom jeweiligen Vorzeichen des Vergleichssignals erfolgt. Besonders vorteilhaft ist es, wenn

- das Vergleichssignal mit einem positiven Schwellenwert verglichen wird, wenn das Vergleichssignal ein positives Vorzeichen aufweist, und das Erdschlussfehlersignal erzeugt wird, wenn das Vergleichssignal den positiven Schwellenwert erreicht oder überschreitet, und
- das Vergleichssignal mit einem negativen Schwellenwert verglichen wird, wenn das Vergleichssignal ein negatives Vorzeichen aufweist, und das Erdschlussfehlersignal erzeugt wird, wenn das Vergleichssignal den negativen Schwellenwert erreicht oder unterschreitet.

Die Erfindung bezieht sich darüber hinaus auf eine Schutzeinrichtung zum Erkennen eines Erdschlusses in einem Energieverteilnetz oder auf einer Energieübertragungsleitung, wobei die Schutzeinrichtung derart ausgebildet ist, dass sie durch eine Integration von Leistungswerten Energiewerte bildet und unter Einbezug der Energiewerte prüft, ob ein Erdschluss vorliegt und ein Erdschlussfehlersignal zu erzeugen ist.

Erfindungsgemäß ist bezüglich einer solchen Schutzeinrichtung vorgesehen, dass diese derart ausgebildet ist, dass sie eine weitere Integration durchführt, und zwar eine solche, bei der die Energiewerte unter Bildung eines Vergleichssignals integriert werden, und unter Einbezug des Vergleichssignals prüft, ob ein Erdschluss vorliegt und das Erdschlussfehlersignal zu erzeugen ist.

Bezüglich der Vorteile und vorteilhafter Ausgestaltungen der erfindungsgemäßen Schutzeinrichtung sei auf die obigen Ausführungen im Zusammenhang mit dem erfindungsgemäßen Verfahren und dessen vorteilhafter Ausgestaltungen verwiesen.

Die Erfindung bezieht sich darüber hinaus auf ein Schutzgerät. Erfindungsgemäß ist bezüglich eines solchen Schutzgeräts vorgesehen, dass dieses mit einer Schutzeinrichtung ausgestattet ist, wie sie oben beschrieben worden ist.

Bezüglich des Schutzgeräts wird es als vorteilhaft angesehen, wenn das Schutzgerät eine Recheneinrichtung und einen Speicher aufweist, in dem ein Steuerprogramm gespeichert ist, und das Steuerprogramm Programmbefehle enthält, die nach Ausführung durch die Recheneinrichtung die Recheneinrichtung dazu veranlassen, ein Verfahren wie oben beschrieben durchzuführen.

Bei der Schutzeinrichtung kann es sich beispielsweise um ein Softmodul handeln, das innerhalb des Steuerprogramms integriert ist.

Die Erfindung wird nachfolgend anhand von Ausführungsbeispielen näher erläutert; dabei zeigen beispielhaft

Figur 1    ein Ausführungsbeispiel für eine erfindungsgemäße Schutzeinrichtung, die zum Erkennen eines Erdschlusses in einem Energieverteilnetz oder auf einer Energieübertragungsleitung geeignet ist,

Figur 2    einen beispielhaften Verlauf für Nullsystem-Leistungswerte, die von der Schutzeinrichtung gemäß Figur 1 im Rahmen der Erdschlussüberwachung erzeugt werden können,

Figur 3    einen beispielhaften Verlauf für Energiewerte, die von der Schutzeinrichtung gemäß Figur 1 im Rahmen der Erdschlussüberwachung erzeugt werden können,

Figur 4    einen beispielhaften Verlauf für ein Vergleichssignal, das von der Schutzeinrichtung gemäß Figur 1 im Rahmen der Erdschlussüberwachung erzeugt werden kann, und

Figur 5    ein Ausführungsbeispiel für ein Schutzgerät, das zum Erkennen eines Erdschlusses geeignet ist und hierzu eine geeignete Schutzeinrichtung, beispielsweise die Schutzeinrichtung gemäß Figur 1, aufweist.

In den Figuren werden der Übersicht halber für identische oder vergleichbare Komponenten stets dieselben Bezugszeichen verwendet.

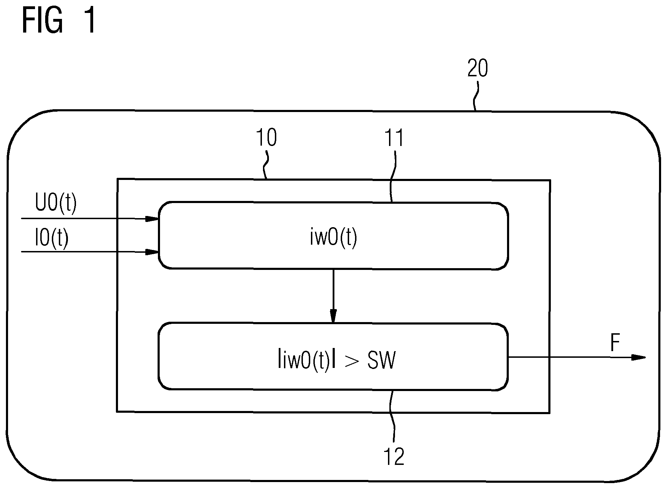

Die Figur 1 zeigt eine Schutzeinrichtung 10, die eine selbständige Einheit bilden oder in einem übergeordneten Schutzgerät 20 implementiert sein kann, wie dies beispielhaft bei der Ausführungsvariante gemäß Figur 1 gezeigt ist. Im Falle einer Integration der Schutzeinrichtung 10 in das Schutzgerät 20 kann die Schutzeinrichtung 10 durch ein oder mehrere Hardwarekomponenten gebildet sein; alternativ kann die Schutzeinrichtung 10 auch durch ein Softwaremodul gebildet sein, das von einer Recheneinrichtung des Schutzgeräts 20 ausgeführt wird.

Die Schutzeinrichtung 10 gemäß Figur 1 weist ein Berechnungsmodul 11 auf. Das Berechnungsmodul 11 wertet eingangsseitig anliegende Nullsystem-Spannungswerte $U0(t)$ und Nullsystem-Stromwerte $I0(t)$ aus und erzeugt mit diesen ein Vergleichssignal $iw0(t)$. Das Berechnungsmodul 11 speist das Vergleichssignal $iw0(t)$ in ein nachgeordnetes Vergleichsmodul 12 der Schutzeinrichtung 10 ein.

Die Berechnung bzw. Bildung der Nullsystem-Spannungswerte $U0(t)$ und der Nullsystem-Stromwerte $I0(t)$ mit oder aus Spannungs- und Strommesswerten eines mehrphasigen elektrischen Energieübertragungssystems ist für sich bekannt; diesbezüglich sei auf die Literatur verwiesen. Die Berechnung bzw. Bildung kann - wie bei dem Ausführungsbeispiel gemäß Figur 1 - extern, also außerhalb der Schutzeinrichtung 10, durchgeführt werden, beispielsweise in anderen in der Figur 1 nicht gezeigten Komponenten des Schutzgeräts 20. Auch kann die Berechnung bzw. Bildung von dem Berechnungsmodul 11 selbst vorgenommen werden, sofern die Spannungs- und Strommesswerte des mehrphasigen elektrischen Energieübertragungssystems in das Berechnungsmodul 11 eingespeist werden.

Das Vergleichsmodul 12 der Schutzeinrichtung 10 vergleicht das Vergleichssignal $iw0(t)$ mit einem oder mehreren Schwellenwerten SW und erzeugt in Abhängigkeit von dem jeweiligen Vergleichsergebnis ausgangsseitig ein Erdschlussfehlersignal F, wenn der Schwellenwertvergleich auf das Vorliegen eines Erdschlusses hinweist.

Die Schutzeinrichtung 10 gemäß Figur 1 kann beispielsweise wie folgt arbeiten:
Mit den eingangsseitig anliegenden Nullsystem-Spannungswerten $U0(t)$ und den eingangsseitig anliegenden Nullsystem-Stromwerten $I0(t)$ berechnet das Berechnungsmodul 11 zunächst Nullsystem-Leistungswerte durch Multiplikation der Nullsystem-Spannungswerte mit den Nullsystem-Stromwerten gemäß:

$$P0(t) = U0(t) \cdot I0(t)$$

wobei $PO(t)$ die von dem jeweiligen Betrachtungszeitpunkt t abhängigen Nullsystem-Leistungswerte, $U0(t)$ die von dem jeweiligen Betrachtungszeitpunkt t abhängigen Nullsystem-Spannungswerte und $I0(t)$ die von dem jeweiligen Betrachtungszeitpunkt t abhängigen Nullsystem-Stromwerte bezeichnet.

Die von dem Berechnungsmodul 11 errechneten Nullsystem-Leistungswerte $PO(t)$ können beispielsweise einen zeitlichen Verlauf aufweisen, wie in der Figur 2 dargestellt ist.

Mit den in dieser Weise ermittelten Nullsystem-Leistungswerten $PO(t)$ kann das Berechnungsmodul 11 nun Energiewerte ermitteln gemäß

$$W0(t) = \int_0^t P0(t)\,dt$$

wobei $WO(t)$ die Energiewerte, die die vom Betrachtungsbeginn t=0 bis zum jeweiligen Betrachtungszeitpunkt t umgesetzte Nullsystem-Energie angeben, bezeichnet. Die Energiewerte $WO(t)$ können auch als Nullsystem-Energiewerte bezeichnet werden.

Die von dem Berechnungsmodul 11 berechneten Energiewerte $WO(t)$ können einen zeitlichen Verlauf aufweisen, wie er beispielhaft in der Figur 3 dargestellt ist.

Nachfolgend kann das Berechnungsmodul 11 mit den ermittelten Energiewerten $WO(t)$ das Vergleichssignal $iw0(t)$ ermitteln gemäß

$$iw0(t) = \int_0^t W0(t)\,dt$$

wobei $iw0(t)$ das Vergleichssignal bezeichnet.

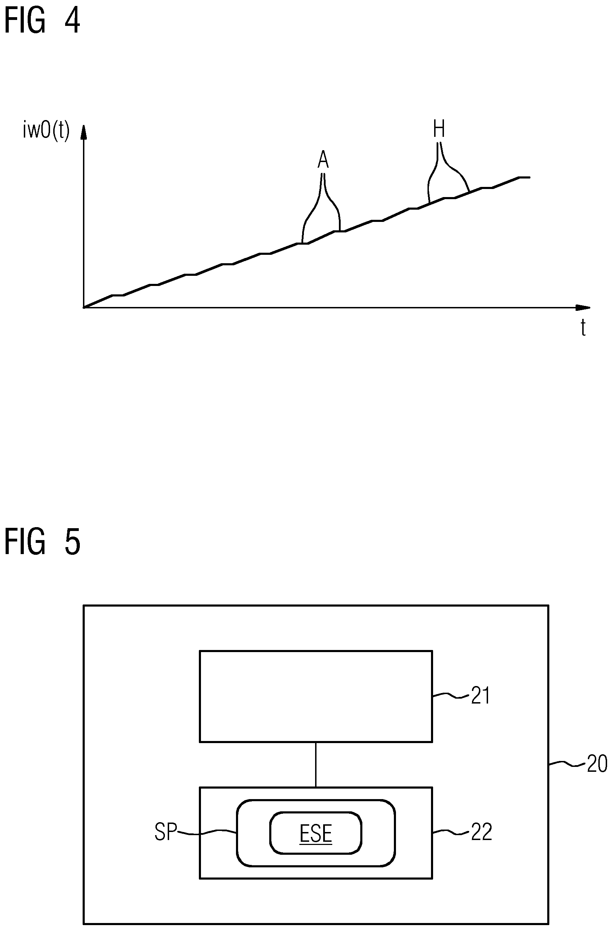

Das von dem Berechnungsmodul 11 ermittelte Vergleichssignal $iw0(t)$ kann einen zeitlichen Verlauf aufweisen, wie er beispielhaft in der Figur 4 dargestellt ist. Es lässt sich erkennen, dass das Vergleichssignal $iw0(t)$ nach einem Fehlereintritt (hier bei t=0) in Abschnitten A monoton ansteigt und in Abschnitten H konstant ist, also quasi-monoton ansteigt und nicht mehr abfällt. Das Vergleichssignal $iw0(t)$ berührt somit die Nulllinie nicht mehr und eignet sich daher deutlich besser für eine Fehlerauswertung als die Nullsystem-Leistungswerte $PO(t)$ oder die Nullsystem-Energiewerte $W0(t)$, die - wie in Figur 2 für die Nullsystem-Leistungswerte $PO(t)$ gezeigt - periodisch das Vorzeichen wechseln oder - wie in Figur 3 für die Nullsystem-Leistungswerte $PO(t)$ gezeigt - periodisch auf Null absinken.

Das Vergleichssignal $iw0(t)$ wird in das nachgeordnete Vergleichsmodul 12 eingespeist, das das Vergleichssignal iw0(t) einem Schwellenwertvergleich unterzieht.

Bei einer bevorzugten Variante ist vorgesehen, dass das Vergleichsmodul 12 lediglich den Betrag des Vergleichssignals iw0(t) auswertet und den Betrag mit einem vorgegebenen Schwellenwert SW vergleicht. Der Schwellenwert liegt bei typischen Wandlerübersetzungen vorzugsweise zwischen 100 und 500 $Ws^2$, insbesondere zwischen 200 und 400 $Ws^2$, und beträgt besonders bevorzugt 300 $Ws^2$.

Überschreitet der Betrag des Vergleichssignals iw0(t) den vorgegebenen Schwellenwert SW, so erzeugt das Vergleichsmodul 12 ausgangsseitig das Erdschlussfehlersignal F. Erreicht der Betrag des Vergleichssignals iw0(t) den Schwellenwert SW nicht, so erfolgt keine Ausgabe eines Erdschlussfehlersignals F oder alternativ die Ausgabe eines Signals, das das Nichtvorliegen eines Erdschlusses anzeigt.

Alternativ kann das Vergleichsmodul 12 den Schwellenwertvergleich auch in Abhängigkeit von dem jeweiligen Vorzeichen des Vergleichssignals iw0(t) durchführen, damit erreicht werden kann, dass unterschiedlich große Schwellenwerte je nach dem Vorzeichen des Vergleichssignals iw0(t) herangezogen werden können. In besonders einfacher Weise lässt sich ein vorzeichenabhängiger Schwellenwertvergleich durchführen, wenn

- das Vergleichssignal mit einem positiven Schwellenwert verglichen wird, wenn das Vergleichssignal ein positives Vorzeichen aufweist, und das Erdschlussfehlersignal erzeugt wird, wenn das Vergleichssignal den positiven Schwellenwert erreicht oder überschreitet, und
- das Vergleichssignal mit einem negativen Schwellenwert verglichen wird, wenn das Vergleichssignal ein negatives Vorzeichen aufweist, und das Erdschlussfehlersignal erzeugt wird, wenn das Vergleichssignal den negativen Schwellenwert erreicht oder unterschreitet.

Die Berechnung des Vergleichssignals iw0(t) kann alternativ auch im Rahmen eines Doppelintegrationsschritts durchgeführt werden, beispielsweise gemäß

$$iw0(t) = \int_0^t \int_0^t U0(t) \cdot I0(t)\, dt\, dt$$

Das Teilintegral $\int_0^t U0(t) \cdot I0(t)\, dt$ bildet hier wieder die oben genannten Energiewerte.

Das Vorzeichen des Vergleichssignals iw0(t) ist im Übrigen abhängig von der Lage des Erdschlusses und ermöglicht damit eine Aussage, ob ein erkannter Erdschluss in Vorwärtsrichtung der Betrachtung oder in Rückwärtsrichtung aufgetreten ist.

Die Figur 5 zeigt ein Ausführungsbeispiel für ein Schutzgerät 20, das zum Erkennen eines Erdschlusses in einem Energieverteilnetz oder auf einer Energieübertragungsleitung geeignet ist. Das Schutzgerät 20 weist eine Recheneinrichtung 21 und ein Speicher 22 auf. In dem Speicher 22 ist ein Steuerprogramm SP gespeichert. Das Steuerprogramm SP enthält Programmbefehle, die nach Ausführung durch die Recheneinrichtung 21 die Recheneinrichtung dazu veranlassen, eine Erdschlussprüfung vorzunehmen und ggf. ein Erdschlussfehlersignal F zu erzeugen, wie dies oben beispielhaft im Zusammenhang mit den Figuren 1 bis 4 erläutert worden ist. Beispielsweise kann das Steuerprogramm SP zu diesem Zweck ein Erdschlusserkennungssoftwaremodul ESE aufweisen, das bei Ausführung durch die Recheneinrichtung 21 eine Schutzeinrichtung bildet, wie sie in der Figur 1 gezeigt und dort mit dem Bezugszeichen 10 gekennzeichnet ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 10 | Schutzeinrichtung |
| 11 | Berechnungsmodul |
| 12 | Vergleichsmodul |
| 20 | Schutzgerät |
| 21 | Recheneinrichtung |
| 22 | Speicher |
| | |
| A | Abschnitt |
| ESE | Erdschlusserkennungssoftwaremodul |
| F | Erdschlussfehlersignal |
| H | Abschnitt |
| I0 (t) | Nullsystem-Stromwerte |
| iw0 (t) | Vergleichssignal |
| P0 (t) | Nullsystem-Leistungswerte |
| SP | Steuerprogramm |
| SW | Schwellenwert |
| t | Betrachtungszeitpunkt |
| U0 (t) | Nullsystem-Spannungswerte |
| W0 (t) | Energiewerte |

**Patentansprüche**

1. Verfahren zum Erkennen eines Erdschlusses in einem elektrischen Energieverteilnetz oder auf einer elektrischen Energieübertragungsleitung, wobei bei dem Verfahren

- durch eine Integration von Leistungswerten Energiewerte gebildet werden, **dadurch gekennzeichnet, dass**
- eine weitere Integration durchgeführt wird, bei der die Energiewerte unter Bildung eines Vergleichssignals (iw0(t)) integriert werden, und
- anhand des Vergleichssignals (iw0(t)) geprüft wird, ob ein Erdschluss vorliegt und das Erdschlussfehlersignal zu erzeugen ist.

2. Verfahren nach Anspruch 1,
**dadurch gekennzeichnet,dass**
das Vergleichssignal (iw0(t)) physikalisch die Dimension eines Produkts aus Energie und Zeit aufweist.

3. Verfahren nach einem der voranstehenden Ansprüche,
**dadurch gekennzeichnet,dass**
das Vergleichssignal (iw0(t)) die physikalische Einheit Js aufweist.

4. Verfahren nach einem der voranstehenden Ansprüche,
**dadurch gekennzeichnet, dass**
die Leistungswerte, mit denen durch die Integration die Energiewerte gebildet werden, Nullsystem-Leistungswerte sind, die die zum jeweiligen Betrachtungszeitpunkt tatsächlich umgesetzte Nullsystem-Leistung angeben.

5. Verfahren nach einem der voranstehenden Ansprüche,
**dadurch gekennzeichnet, dass**
die Leistungswerte, mit denen durch die Integration die Energiewerte gebildet werden, ermittelt werden gemäß

$$P0(t) = U0(t) \cdot I0(t)$$

wobei P0(t) die von dem jeweiligen Betrachtungszeitpunkt t abhängigen Leistungswerte, U0(t) die von dem jeweiligen Betrachtungszeitpunkt t abhängigen Nullsystem-Spannungswerte und I0(t) die von dem jeweiligen Betrachtungszeitpunkt t abhängigen Nullsystem-Stromwerte bezeichnet.

6. Verfahren nach einem der voranstehenden Ansprüche,
**dadurch gekennzeichnet, dass**
die Energiewerte ermittelt werden gemäß

$$W0(t) = \int_0^t P0(t)dt$$

wobei W0(t) die Energiewerte, die die vom Betrachtungsbeginn t=0 bis zum jeweiligen Betrachtungszeitpunkt t umgesetzte Nullsystem-Energie angeben, und P0(t) Nullsystem-Leistungswerte bezeichnet, die die zum jeweiligen Betrachtungszeitpunkt t umgesetzte Nullsystem-Leistung angeben.

7. Verfahren nach einem der voranstehenden Ansprüche,
**dadurch gekennzeichnet, dass**
das Vergleichssignal (iw0(t)) ermittelt wird gemäß

$$iw0(t) = \int_0^t W0(t)dt$$

wobei iw0(t) das Vergleichssignal und W0(t) die Energiewerte bezeichnet, die die vom Betrachtungsbeginn t=0 bis zum jeweiligen Betrachtungszeitpunkt t umgesetzte Nullsystem-Energie angegeben.

8. Verfahren nach einem der voranstehenden Ansprüche,
**dadurch gekennzeichnet, dass**
das Vergleichssignal (iw0(t)) durch Doppelintegration ermittelt wird gemäß

$$iw0(t) = \int_0^t \int_0^t U0(t) \cdot I0(t)dtdt$$

wobei iw0(t) das Vergleichssignal, U0(t) die von dem jeweiligen Betrachtungszeitpunkt t abhängigen Nullsystem-Spannungswerte, I0(t) die von dem jeweiligen Betrachtungszeitpunkt t abhängigen Nullsystem-Stromwerte und das Teilintegral $\int_0^t U0(t) \cdot I0(t)dt$ die oben genannten Energiewerte bezeichnet.

9. Verfahren nach einem der voranstehenden Ansprüche,
**dadurch gekennzeichnet, dass**

- der Betrag des Vergleichssignals (iw0(t)) mit einem Schwellenwert verglichen wird und
- das Erdschlussfehlersignal (F) erzeugt wird, wenn der Schwellenwert (SW) erreicht oder überschritten wird.

10. Verfahren nach einem der voranstehenden Ansprüche,
**dadurch gekennzeichnet, dass**

- das Vergleichssignal (iw0(t)) mit einem positiven Schwellenwert verglichen wird, wenn das Vergleichssignal (iw0(t)) ein positives Vorzeichen aufweist, und das Erdschlussfehlersignal (F) erzeugt wird, wenn das Vergleichssignal (iw0(t)) den positiven Schwellenwert erreicht oder überschreitet, und

- das Vergleichssignal (iw0(t)) mit einem negativen Schwellenwert verglichen wird, wenn das Vergleichssignal (iw0(t)) ein negatives Vorzeichen aufweist, und das Erdschlussfehlersignal (F) erzeugt wird, wenn das Vergleichssignal (iw0(t)) den negativen Schwellenwert erreicht oder unterschreitet.

11. Schutzeinrichtung (10) zum Erkennen eines Erdschlusses in einem elektrischen Energieverteilnetz oder auf einer elektrischen Energieübertragungsleitung, wobei die Schutzeinrichtung (10) derart ausgebildet ist, dass sie durch eine Integration von Leistungswerten Energiewerte bildet **dadurch gekennzeichnet, dass** die Schutzeinrichtung (10) außerdem derart ausgebildet ist, dass sie

- eine weitere Integration durchführt, bei der die Energiewerte unter Bildung eines Vergleichssignals (iw0(t)) integriert werden, und
- unter Einbezug des Vergleichssignals (iw0(t)) prüft, ob ein Erdschluss vorliegt und das Erdschlussfehlersignal (F) zu erzeugen ist.

12. Schutzgerät (20),
**dadurch gekennzeichnet, dass**
das Schutzgerät (20) eine Schutzeinrichtung (10) nach Anspruch 11 aufweist.

13. Schutzgerät (20),
**dadurch gekennzeichnet, dass**

- das Schutzgerät (20) eine Recheneinrichtung (21) und einen Speicher (22) aufweist, in dem ein Steuerprogramm (SP) gespeichert ist, und
- das Steuerprogramm (SP) Programmbefehle enthält, die nach Ausführung durch die Recheneinrichtung (21) die Recheneinrichtung (21) dazu veranlassen, ein Verfahren nach einem der voranstehenden Ansprüche durchzuführen.

14. Schutzgerät (20) nach Anspruch 13,
**dadurch gekennzeichnet, dass**
die Schutzeinrichtung (10) nach Anspruch 11 durch ein Softwaremodul (ESE) innerhalb des Steuerprogramms (SP) gebildet ist.

**Claims**

1. Method for detecting an earth fault in an electrical power distribution grid or on an electrical power transmission line, wherein the method involves

- energy values being formed by means of an integration of power values,
**characterized in that**
- a further integration is performed that involves the energy values being integrated to form a comparison signal (iw0(t)), and
- the comparison signal (iw0(t)) is used to check whether there is an earth fault and the earth fault error signal needs to be generated.

2. Method according to Claim 1,
**characterized in that**
the comparison signal (iw0(t)) physically has the dimension of a product of energy and time.

3. Method according to either of the preceding claims,
**characterized in that**
the comparison signal (iw0(t)) has the physical unit Js.

4. Method according to one of the preceding claims,
**characterized in that**
the power values used to form the energy values by means of the integration are zero phase-sequence system power values indicating the zero phase-sequence system power actually converted at the respective time of consideration.

5. Method according to one of the preceding claims,
**characterized in that**
the power values used to form the energy values by means of the integration are ascertained according to

$$P0(t) = U0(t) \cdot I0(t)$$

where P0(t) denotes the power values dependent on the respective time of consideration t, U0(t) denotes the zero phase-sequence system voltage values dependent on the respective time of consideration t and I0(t) denotes the zero phase-sequence system current values dependent on the respective time of consideration t.

6. Method according to one of the preceding claims,
**characterized in that**
the energy values are ascertained according to

$$W0(t) = \int_0^t P0(t)\,dt$$

where WO(t) denotes the energy values indicating the zero phase-sequence system energy converted from the beginning of consideration t=0 to the respective time of consideration t and P0(t) denotes zero phase-sequence system power values indicating the zero phase-sequence system power converted at the respective time of consideration t.

7. Method according to one of the preceding claims, **characterized in that**
the comparison signal (iw0(t)) is ascertained according to

$$iw0(t) = \int_0^t W0(t)dt$$

where (iw0(t)) denotes the comparison signal and WO(t) denotes the energy values indicating the zero phase-sequence system energy converted from the beginning of consideration t=0 to the respective time of consideration t.

8. Method according to one of the preceding claims, **characterized in that**
the comparison signal (iw0(t)) is ascertained by means of double integration according to

$$iw0(t) = \int_0^t \int_0^t U0(t) \cdot I0(t)dtdt$$

where iw0(t) denotes the comparison signal, U0(t) denotes the zero phase-sequence system voltage values dependent on the respective time of consideration t, I0(t) denotes the zero phase-sequence system current values dependent on the respective time of consideration t and the partial integral $\int_0^t U0(t) \cdot I0(t)dt$ denotes the aforementioned energy values.

9. Method according to one of the preceding claims, **characterized in that**

- the absolute value of the comparison signal (iw0(t)) is compared with a threshold value and
- the earth fault error signal (F) is generated if the threshold value (SW) is reached or exceeded.

10. Method according to one of the preceding claims, **characterized in that**

- the comparison signal (iw0(t)) is compared with a positive threshold value if the comparison signal (iw0(t)) has a positive arithmetic sign, and the earth fault error signal (F) is generated if the comparison signal (iw0(t)) reaches or exceeds the positive threshold value, and
- the comparison signal (iw0(t)) is compared with a negative threshold value if the comparison signal (iw0(t)) has a negative arithmetic sign, and the earth fault error signal (F) is generated if the comparison signal (iw0(t)) reaches or is below the negative threshold value.

11. Protective device (10) for detecting an earth fault in an electrical power distribution grid or on an electrical power transmission line, wherein the protective device (10) is designed such that it forms energy values by means of an integration of power values, **characterized in that**
the protective device (10) is additionally designed such that it

- performs a further integration that involves the energy values being integrated to form a comparison signal (iw0(t)), and
- includes the comparison signal (iw0(t)) to check whether there is a earth fault and the earth fault error signal (F) needs to be generated.

12. Protective unit (20), **characterized in that**
the protective unit (20) has a protective device (10) according to Claim 11.

13. Protective unit (20), **characterized in that**

- the protective unit (20) has a computing device (21) and a memory (22) storing a control program (SP) and
- the control program (SP) contains program instructions that, following execution by the computing device (21), prompt the computing device (21) to perform a method according to one of the preceding claims.

14. Protective unit (20) according to Claim 13, **characterized in that**
the protective device (10) according to Claim 11 is formed by a software module (ESE) within the control program (SP).

## Revendications

1. Procédé de détection d'une fuite à la terre dans un réseau de distribution d'énergie électrique ou sur une ligne de transport d'énergie électrique, dans lequel, dans le procédé

- on forme des valeurs d'énergie par une intégration de valeurs de puissance,

**caractérisé en ce que**

- on effectue une autre intègration, dans laquelle on intègre les valeurs d'énergie en formant un signal (iw0(t)) de comparaison, et
- à l'aide du signal (iw0(t)) de comparaison, on contrôle s'il y a une fuite à la terre et on produit le signal de défaut de fuite à la terre.

2. Procédé suivant la revendication 1,
 **caractérisé en ce que**
 le signal (iw0(t)) de comparaison a, physiquement, la dimension d'un produit de l'énergie par le temps.

3. Procédé suivant l'une des revendications précédentes,
 **caractérisé en ce que**
 le signal (iw0(t)) de comparaison a l'unité physique Js.

4. Procédé suivant l'une des revendications précédentes,
 **caractérisé en ce que**
 les valeurs de puissance, dont les valeurs d'énergie sont formées par intégration, sont des valeurs de puissance de système homopolaire, qui indiquent la puissance de système homopolaire transformée réellement à l'instant respectif considéré.

5. Procédé suivant l'une des revendications précédentes,
 **caractérisé en ce que**
 l'on détermine les valeurs de puissance, dont on forme les valeurs d'énergie par l'intégration suivant

$$P0(t) = U0(t) \,.\, I0(\,t\,)$$

 dans laquelle P0(t) désigne les valeurs de puissance qui dépendent de l'instant t respectif considéré, U0(t) les valeurs de tension de système homopolaire qui dépendent de l'instant t respectif considéré, et I0(t) les valeurs de courant de système homopolaire qui dépendent de l'instant t respectif considéré.

6. Procédé suivant l'une des revendications précédentes,
 **caractérisé en ce que**
 l'on détermine les valeurs d'énergie suivant

$$W0(t) = \int_0^t P0(t) dt$$

 dans laquelle W0(t) désigne les valeurs d'énergie qui indiquent l'énergie de système homopolaire transformée du début de prise en considération t=0 à l'instant t respectif considéré, et P0(t) les valeurs de puissance de système homopolaire qui indiquent la puissance de système homopolaire transformée à l'instant t respectif considéré.

7. Procédé suivant l'une des revendications précédentes,
 **caractérisé en ce que**
 l'on détermine le signal (iw0(t)) de comparaison suivant

$$iw0(t) = \int_0^t W0(t) dt$$

 dans laquelle iw0(t) désigne le signal de comparaison et W0(t) les valeurs d'énergie, qui indiquent l'énergie de système homopolaire transformé du début de la prise en considération t=0 jusqu'à l'instant t respectif considéré.

8. Procédé suivant l'une des revendications précédentes,
 **caractérisé en ce que**
 l'on détermine le signal (iw0(t)) de comparaison par double intégration suivant

$$iw0(t) = \int_0^t \int_0^t U0(t) \,.\, I0(\,t\,) dt \, dt$$

 dans laquelle iw0(t) désigne le signal de comparaison, U0(t) les valeurs de tension de système homopolaire qui dépendent de l'instant t respectif considéré, I0(t) les valeurs de courant de système homopolaire qui dépendent de l'instant t respectif considéré et l'intégral partiel $\int_0^t U0(t) \,.\, I0(\,t\,) dt$ les valeurs d'énergie mentionnées ci-dessus.

9. Procédé suivant l'une des revendications précédentes, **caractérisé en ce que**

 - on compare la valeur absolue du signal (iw0(t)) de comparaison à une valeur de seuil et
 - on produit le signal (F) d'erreur de fuite à la terre, si la valeur (SW) de seuil est atteinte ou dépassée.

10. Procédé suivant l'une des revendications précédentes,
 **caractérisé en ce que**

 - on compare le signal (iw0(t)) de comparaison à une valeur de seuil positive, si le signal (iw0(t)) de comparaison a un signe positif, et on produit le signal (F) d'erreur de fuite à la terre si le signal (iw0(t)) de comparaison atteint ou dépasse la valeur de seuil positive, et
 - on compare le signal (iw0(t)) de comparaison à une valeur de seuil négative, si le signal (iw0(t)) de comparaison a un signe négatif, et on produit le signal (F) d'erreur de fuite à la terre si le signal (iw0(t)) de comparaison atteint la valeur de seuil négative ou lui est inférieur.

11. Dispositif (10) de protection pour détecter une fuite à la terre dans un réseau de distribution d'énergie électrique ou sur une ligne de transport d'énergie électrique, le dispositif (10) de protection étant constitué de manière à former des valeurs d'énergie par une intégration de valeurs de puissance,
**caractérisé en ce que**
le dispositif (10) de protection est constitué, en outre, de manière

- à effectuer une autre intégration, dans laquelle les valeurs d'énergie sont intégrées en formant un signal (iw0(t)) de comparaison, et
- à contrôler, en incluant le signal (iw0(t)) de comparaison, s'il y a une fuite à la terre et à produire le signal (F) de défaut de fuite à la terre.

12. Appareil (20) de protection,
**caractérisé en ce que**
l'appareil (20) de protection a un dispositif (10) de protection suivant la revendication 11.

13. Appareil (20) de protection,
**caractérisé en ce que**

- l'appareil (20) de protection a un dispositif (21) informatique et une mémoire (22), dans laquelle un programme (SP) de commande est mis en mémoire, et
- le programme (SP) de commande contient des instructions de programme, qui, après exécution par le dispositif (21) informatique, font que le dispositif (21) informatique effectue un procédé suivant l'une des revendications précédentes.

14. Appareil (20) de protection suivant la revendication 13,
**caractérisé en ce que**
le dispositif (10) de protection suivant la revendication 11 est formé par un module (ESE) de logiciel au sein du programme (SP) de commande.

## FIG 1

FIG 2

FIG 3

## FIG 4

## FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 703900 B1

- WO 2013060382 A

**In der Beschreibung aufgeführte Nicht-Patentliteratur**

- Neues empfindliches Verfahren zur Erkennung von Erdschlusswischern. **STEFAN WERBEN ; IGNAZ HÜBL ; KLAUS BÖHME.** ETG Fachbericht 143 STE. VDE Verlag, 2014